# EUROPEAN PATENT SPECIFICATION

(11) **EP 1 788 203 B1**
(45) Date of publication and mention of the grant of the patent: **14.07.2010**
(21) Application number: 05110940.3
(22) Date of filing: 18.11.2005
(51) Int. Cl.: F01L 13/00, F02D 13/02, F02D 41/30

(54) **An internal combustion engine comprising a variable valve lift system and a method for controlling valve lift shifting**
Brennkraftmaschine mit einem Ventiltrieb mit variablem Ventilhub und Verfahren zur Steuerung des Ventilhubumschaltens
Moteur à combustion interne à système de levée de soupape variable et méthode de contrôle du changement d'une levée de soupape à l'autre

(43) Date of publication of application: 23.05.2007
(73) Proprietor: Ford Global Technologies, LLC, Dearborn, MI 48126 (US)
(72) Inventor: Lyngfelt, Thomas, 414 62, Göteborg (SE); Litorell, Martin, 414 59, Göteborg (SE)
(74) Representative: Holmberg, Magnus

(56) References cited:
- EP-A- 0 359 363
- US-A- 4 917 057
- US-A- 5 009 203

## Description

### TECHNICAL FIELD

The present invention relates to a method for controlling valve lift shifting in an internal combustion engine comprising a variable valve lift system whereby the engine can operate selectively in either of at least two valve lift modes. The present invention also relates to an internal combustion engine comprising an engine control unit, and a variable valve lift system whereby the engine can operate selectively in either of at least two valve lift modes.

### BACKGROUND

In an internal combustion engine with a variable valve lift system, in particular a cam profile shifting (CPS) system, for instance as described in US5287830A, switching cam profiles can introduce a step in the output torque of the engine, which can cause discomfort to persons in a vehicle in which the engine is operating. The reason for such a step in the output torque could be that in the amount of air trapped in the cylinders differ from one valve lift mode to another.

Document US5009203A discloses a method for controlling valve lift shifting in an internal combustion engine comprising a variable valve lift system whereby the engine can operate selectively in either of at least two lift modes. The method comprising comparing the fuel supply (Tout) with a threshold value (Tvt) that is related to the engine speed.

### SUMMARY OF THE INVENTION

It is an object of the invention to minimise torque steps when shifting modes in a variable valve lift system of an internal combustion engine.

This object is reached by a method of the type mentioned initially, comprising comparing the fuel supply (CF) with a fuel supply threshold value (FT), and at least partly based on the result of the comparison, determining whether a valve lift mode shift should be performed.

Thereby, based on the comparison, it can be determined that if the fuel supply is equal to or below the fuel supply threshold value, a valve lift mode shift is performed. As is closer described below, if the engine fuel supply is above the fuel supply threshold value, it can be determined that a valve lift mode shift is not performed. The fuel supply threshold value should be chosen so that the energy released at individual combustions, regardless of the air supply, is low. Thereby, at, or under the fuel supply threshold value, a difference of the air supply caused by a valve lift mode shift will not cause a noticeable step in the output torque of the engine.

It should be noted that the invention does not exclude the possibility that criterias other than the fuel supply, such as requested transient torque, can be considered when determining whether a valve lift mode shift should be performed.

Preferably, the fuel supply threshold value corresponds to the fuel supply being cut off. Thereby, it is secured that a difference of the air supply caused by a valve lift mode shift will not cause a step in the output torque of the engine.

The object of the invention is also reached with an internal combustion engine according to any of the claims 3 or 4.

### DESCRIPTION OF THE FIGURES

Below, the invention will be described in detail with reference to the drawing, in which
- fig. 1 is a schematic view of parts of an internal combustion engine, comprising a variable valve timing system and a cam profile shifting system, the latter in a low lift position,
- fig. 2 is a detail of the view in fig. 1, where the cam profiles have been shifted to a high lift position, and
- fig. 3 is a block diagram depicting a method according to an embodiment of the invention.

### DETAILED DESCRIPTION

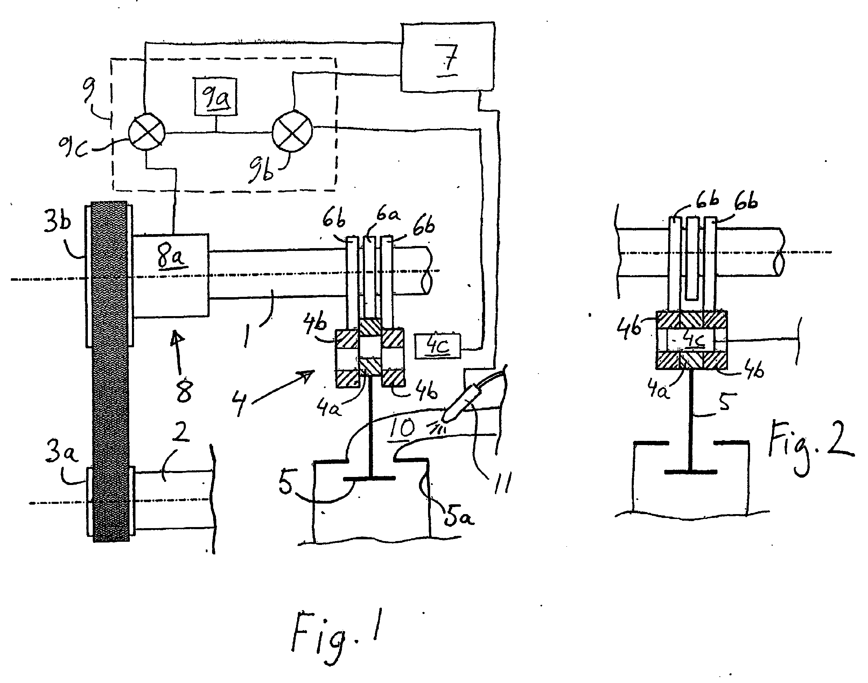

Fig. 1 shows schematically parts of an internal combustion engine. A camshaft 1 is driven by a crankshaft 2 via a belt (or chain) 3, a crankshaft wheel 3a, and a camshaft wheel 3b in a manner known in the art. The engine comprises a variable valve lift system in the form of a cam profile shifting (CPS) system 4, adapted to shift the lift profile of intake and/or exhaust valves of the engine, by changing the valve lift provided by camlobes 6a, 6b on the camshaft 1. In fig. 1 only one valve, in the form of an intake valve 5 at a cylinder 5a is shown. In this example, for each valve 5 there is provided one low lift camlobe 6a and two high lift camlobes 6b.

In operation each of the camlobes 6a, 6b acts on valve actuators 4a, 4b, located between the camlobes and the valve. The valve actuators are fixable to each other by a CPS actuator 4c, here in the form of a locking pin 4c, in turn controllable by a hydraulic system 9, indicated in fig. 1 with broken lines. The hydraulic system 9 can be, as is known in the art, used for manoeuvring a plurality of units of the engine, and comprises a hydraulic pump 9a. For control of the CPS actuator(s) 4c, the cam profile shifting (CPS) system 4 comprises a CPS actuator control valve 9b in the hydraulic system 9. The CPS actuator control valve 9b is controllable by an engine control unit (ECU) 7. The CPS actuator control valve 9b can be of a known type, for example a solenoid valve, not further described here. The ECU 7 has, as known, computational capabilities and storage capabilities, and can be formed by one device, or more than one physically separate, but logically connected devices.

In a low lift mode, shown in fig. 1, the valve actuators 4a, 4b are not fixed to each other by the CPS actuator 4c, which results in the valve lift being controlled by the low lift camlobe 6a. As can be seen in fig. 2, in a high lift mode the valve actuators 4a, 4b are fixed to each other by the CPS actuator 4c, so that the valve motion is controlled by the high lift camlobes 6b.

Alternatively, still within the scope of the present invention, the variable valve lift system can be provided in a variety of manners known in the art, for example as described in US5950583A. In particular, the CPS actuator can be provided in alternative manners, and the CPS system can be adapted to assume more than two cam profile modes.

The engine also comprises a variable valve timing (WT) system 8, which is adapted to adjust the VVT position, i.e. set the camshaft 1 at desired angular positions in relation to the camshaft wheel 3b. The VVT system comprises a VVT actuator 8a, for example of the type described in US6135077A, at the camshaft wheel 3b. The VVT actuator 8a is adapted to mechanically change the VVT position, and is controllable by the hydraulic system 9. For control of the VVT actuator 8a, the VVT system 8 comprises a VVT actuator control valve 9c in the hydraulic system 9. The VVT actuator control valve 9c is also controllable by the ECU 7, and could be of the same type as the CPS actuator control valve 9b.

Also provided are means (not shown) to establish the engine speed, in a manner known in the art.

As can be seen in fig. 1, in an intake manifold 10 a fuel injector 11 is controllable by the ECU 7. Alternatively, the fuel injector can be provided in the cylinder 5.

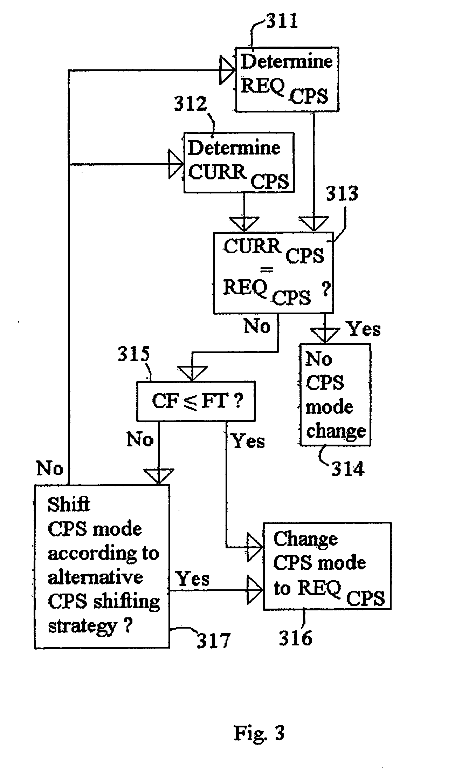

Here reference is made to fig. 3. The ECU 7 is adapted to determine a required CPS mode 311, and a current CPS mode 312, and also to determine whether the required and the current CPS modes are identical 313. If they are identical, no cam profile shift is performed 314. If the required and the current CPS modes are not identical, it is determined 315 whether the current engine fuel supply CF, provided by the fuel injector(s) 11, is below a fuel supply threshold value FT, described closer below.

Here, fuel supply refers to the total supply of fuel in the engine. Alternatively, it could refer to a mean fuel supply to the respective cylinder, i.e. the total supply in the engine divided by the number of cylinders.

Based on the result of the determination 315 regarding the engine fuel supply CF, it is determined whether a valve lift mode shift should be performed. If the engine fuel supply CF is equal to or below the fuel supply threshold value FT, a valve lift mode shift is performed 316. If the engine fuel supply CF is above the fuel supply threshold value FT, it is determined 317 whether the CPS mode should be changed according to an alternative CPS mode shifting strategy. This alternative strategy could be a strategy that takes the VVT position into account for cam profile shifts, as described in the European Patent Application No. __________, filed by the same applicant on the same day as this application. If it is determined 317 according to the alternative CPS mode shifting strategy that a valve lift mode shift should be performed, a valve lift mode shift is performed 316. However, if it is determined 317 according to the alternative CPS mode shifting strategy that a valve lift mode shift should not be performed, a required CPS mode 311 and a current CPS mode 312 are again determined.

Alternatively, if it is determined 317 according to the alternative CPS mode shifting strategy that a valve lift mode shift should not be performed, simply no cam profile shift is performed. As a further alternative, no consideration for any alternative CPS mode shifting strategy could be made. In such a case, if it is determined 315 that the engine fuel supply CF is above the fuel supply threshold value FT, a required CPS mode 311 and a current CPS mode 312 are again determined, or simply no cam profile shift is performed.

The fuel supply threshold value FT could be predetermined, or it could be determined based on at least one engine operation related parameter, for example the engine speed. Such determinations could be based on predetermined functions or tables mapping the fuel supply threshold value FT to the engine operation related parameter(s). Also, the fuel supply threshold value FT could be calibratable. In a preferred embodiment, the fuel supply threshold value FT is zero, i.e. the fuel supply CF is cut off.

It should be noted that the invention is equally applicable to engines with variable valve lift systems providing more than two valve lift modes.

It should also be noted that the method according to the invention is equally applicable to engines with spark ignition and engines with compression ignition.

## Claims

1. A method for controlling valve lift shifting in an internal combustion engine comprising a variable valve lift system (4) whereby the engine can operate selectively in either of at least two valve lift modes, said method comprises comparing the fuel supply (CF) with a fuel supply threshold value (FT), and at least partly based on the result of the comparison, determining whether a valve lift mode shift should be performed, **characterized in that** the fuel supply threshold value (FT) is zero, i.e. the fuel supply (CF) is cut off, and
wherein the fuel supply threshold value (FT) corresponds to the fuel supply (CF) being cut off.

2. An internal combustion engine comprising an engine control unit (7), and a variable valve lift system (4) whereby the engine can operate selectively in either of at least two valve lift modes, said engine control unit (7) is adapted to compare the fuel supply (CF) with a fuel supply threshold value (FT), and at least partly based on the result of the comparison, determine whether a valve lift mode shift should be performed, **characterized in that** the fuel supply threshold value (FT) is zero, i.e. the fuel supply (CF) is cut off, and
wherein the fuel supply threshold value (FT) corresponds to the fuel supply (CF) being cut off.

## Patentansprüche

1. Verfahren zum Steuern einer Ventilhubverschiebung in einem Verbrennungsmotor, der ein variables Ventilhubsystem (4) umfasst, mit dem der Motor wahlweise in einer von zumindest zwei Ventilhubarten arbeiten kann, wobei das Verfahren umfasst: Vergleichen einer Kraftstoffversorgung (CF) mit einem Kraftstoffversorgungsschwellwert (FT), und, zumindest teilweise basierend auf dem Ergebnis des Vergleichs, Bestimmen, ob eine Ventilhubartverschiebung durchgeführt werden soll,
**dadurch gekennzeichnet, dass**
der Kraftstoffversorgungsschwellwert (FT) Null ist, das heißt, dass die Kraftstoffversorgung (CF) abgeschnitten ist, und
bei dem der Kraftstoffversorgungsschwellwert (FT) der abgeschnittenen Kraftstoffversorgung (CF) entspricht.

2. Verbrennungsmotor mit einer Motorsteuereinheit (7) und einem variablen Ventilhubsystem (4), wodurch der Motor wahlweise in einer von zumindest zwei Ventilhubarten arbeiten kann, wobei die Motorsteuereinheit (7) die Kraftstoffversorgung (CF) mit einem Kraftstoffversorgungsschwellwert (FT) vergleichen kann, und, zumindest teilweise basierend auf dem Ergebnis des Vergleichs, bestimmen kann, ob eine Ventilhubartverschiebung durchgeführt werden soll,
**dadurch gekennzeichnet, dass**
der Kraftstoffversorgungsschwellwert (FT) Null ist, das heißt, dass die Kraftstoffversorgung (CF) abgeschnitten ist, und
bei dem der Kraftstoffversorgungsschwellwert (FT) der abgeschnittenen Kraftstoffversorgung (CF) entspricht.

## Revendications

1. Procédé pour commander le changement de levée de soupape dans un moteur à combustion interne comprenant un système de levée de soupape variable (4) grâce à quoi le moteur peut fonctionner sélectivement dans l'un d'au moins deux modes de levée de soupape, ledit procédé comprend l'étape consistant à comparer l'alimentation en carburant (CF) à une valeur de seuil d'alimentation en carburant (FT), et au moins partiellement en fonction du résultat de la comparaison, déterminer si un changement de mode de levée de soupape doit être réalisé, **caractérisé en ce que** la valeur de seuil d'alimentation en carburant (FT) est égale à zéro, c'est-à-dire que l'alimentation en carburant (CF) est coupée, et
où la valeur de seuil d'alimentation en carburant (FT) correspond à la coupure de l'alimentation en carburant (CF).

2. Moteur à combustion interne comprenant une unité de commande de moteur (7), et un système de levée de soupape variable (4) grâce à quoi le moteur peut fonctionner sélectivement dans l'un d'au moins deux modes de levée de soupape, ladite unité de commande de moteur (7) est adaptée pour comparer l'alimentation en carburant (CF) à une valeur de seuil d'alimentation en carburant (FT), et au moins partiellement en fonction du résultat de la comparaison, déterminer si un changement de mode de levée de soupape doit être réalisé, **caractérisé en ce que** la valeur de seuil d'alimentation en carburant (FT) est égale à zéro, c'est-à-dire que l'alimentation en carburant (CF) est coupée, et
où la valeur de seuil d'alimentation en carburant (FT) correspond à la coupure de l'alimentation carburant (CF).
